# EUROPÄISCHE PATENTSCHRIFT

(11) **EP 1 039 582 B1**
(45) Veröffentlichungstag und Bekanntmachung des Hinweises auf die Patenterteilung: **12.09.2007**
(21) Anmeldenummer: 00103677.1
(22) Anmeldetag: 22.02.2000
(51) Int. Cl.: H01R 9/26

(54) **Modulartiges elektrisches Gerät**
Modular electric device
Appareil électrique modulaire

(30) Priorität: 23.03.1999 DE 29905300 U
(43) Veröffentlichungstag der Anmeldung: 27.09.2000
(73) Patentinhaber: Weidmüller Interface GmbH & Co., 32760 Detmold (DE)
(72) Erfinder: Conrad, Horst, 32756 Detmold (DE); Fricke, Herbert, 32760 Detmold (DE); Hanning, Walter, 32758Detmold (DE); Homeier, Frank, 32756 Detmold (DE); Lange, Stephan, 32816 Schieder-Schwalenberg (DE); Richts, Jörg, 33189 Schlangen (DE); Strate, Klaus, 32758 Detmold (DE)
(74) Vertreter: Dantz, Jan Henning

(56) Entgegenhaltungen:
- DE-A- 4 403 585
- DE-U- 29 802 715
- FR-A- 2 168 055
- US-A- 5 629 831

## Beschreibung

Die Erfindung betrifft ein modulartiges elektrisches Gerät nach dem Oberbegriff des Anspruches 1.

Bei elektrischen Geräten, die aus einer Aneinanderreihung von mehreren Modulblöcken auf einer Tragschiene bestehen, ergibt sich insbesondere bei der Weitergabe eines Busses oder bei der Weitergabe anderer elektrischer Potentiale zwischen den Modulblöcken die Notwendigkeit dazu, die Modulblöcke auch mechanisch so fest miteinander zu verbinden, daß die Bussysteme oder Leiterverbindungen nicht zu leicht - z.B. durch Rüttelbewegungen, wie sie in der Einbausituation einer Maschinensteuerung auftreten - voneinander gelöst werden können.

Aus der gattungsgemäßen DE 44 03 585 A1 ist es bekannt, bei einem elektrischen Gerät mit einer Aneinanderreihung mehrerer Einzelgehäuse diese Einzelgehäuse so miteinander zu verbinden, daß nach dem Einsetzen der Verbindungselemente zur Verbindung zweier nebeneinander liegender elektrischer Gerätegehäuse ein gegenseitiges Lösen der Gehäuse nicht ohne Zerstörung des Verbindungselementes möglich ist. Dabei verbleibt infolge einer Zerstörung eines Verbindungselementes ein Teil des Verbindungselementes zumindest in einem Gehäuse unverlierbar, so daß ein erneutes Zusammenbauen der Gehäuse des elektrischen Gerätes verhindert wird. Eine derartige Lösung kann zwar aus Sicherheitsgründen bei einzelnen elektrischen Geräten sinnvoll sein, bei vielen elektrischen Geräten ist es jedoch durchaus wünschenswert, eine einmal gewählte Zusammenstellung auch wieder lösen und verändern zu können.

Ein elektrisches Gerät ist aus der DE 298 02 715 bekannt. Das in dieser Schrift beschriebene elektrische Gerät besteht aus einer Aneinanderreihung von Modulen, welche jeweils aus Einzelscheiben bestehen (nach Art der EP 0 709 933 A2) und eine Busanschlußmöglichkeit aufweisen, wobei auf die Module Elektronikgehäuse einsetzbar sind. Die Module/Klemmenblöcke werden mittels Klammern zusammengehalten, welche in Führungsnuten benachbarter Klemmenblöcke eingreifen und deren gegenseitige Lage auf der Normschiene verriegeln. Diese Lösung verbessert zwar die mechanische Verbindung der Einzelmodule miteinander. Problematisch an dieser Lösung ist jedoch, daß die Klammern aufgrund des gewählten Elektronikaufbaus keine Verrasttmöglichkeit mit der Bridge aufweisen. Ein weiteres Problem dieser Klammern besteht darin, daß sie trotz ihrer Federwirkung noch zu leicht aus den Modulblöcken ausfallen können. Schließlich ist es nach einer weiteren Erkenntnis der Erfindung auch problematisch, daß bei einem scheibenweisen Aufbau der Modulblöcke stets nur die letzte Scheibe eines vorhergehenden Modulblockes mit der ersten Scheibe eines nachfolgenden Modulblokkes verbunden werden kann. Verwindungsbewegungen werden daher durch die Klammem nicht vermieden.

Ausgehend vom gattungsgemäßen Stand der Technik zielt die Erfindung darauf ab, die Verbindungseinrichtungen derart weiterzuentwickeln, daß bei einfacher Handhabung und unkomplizierter konstruktiver Ausgestaltung ein Ausfallen durch Rüttelbeanspruchungen verhindert wird.

Die Erfindung erreicht dieses Ziel durch den Gegenstand des Anspruches 1.

Eine Ausbildung der Verbindungseinrichtung als Riegelstange an den Außenflächen der Modulblöcke bringt den Vorteil mit sich, daß ein Aufsetzen und Abnehmen der Verbindungseinrichtung auch bei aufgesetztem Elektronikgehäuse möglich ist. Durch die Verschwenkbarkeit ist zudem ein versehentliches Verlieren der Verbindungselemente ausgeschlossen.

Nach einer Variante der Erfindung sind die Zapfen als Steckelemente ausgebildet, welche in Aussparungen der Modulblöcke verrastbar sind. Vorzugsweise werden die Zapfen jedoch an die Modulscheiben angegossen, um die Kosten der Herstellung zu senken.

Bei einer weiteren Ausführungsform der Erfindung wird die Verwindungssteifigkeit des elektrischen Gerätes dadurch erhöht, daß die Modulblöcke an wenigstens einer ihrer Außenflächen mit zwei nebeneinander liegenden Zapfenreihen versehen sind. Vorzugsweise wird dabei eine der Zapfenreihen aus Zapfen gebildet, welche einen zylindrischen Steg und einen darauf aufgesetzten Zapfenkopf aufweisen. Die zweite Zapfenreihe besteht vorzugsweise aus schwalbenschwanzförmigen Formschlußelementen.

Bei einer weiteren besonders bevorzugten Ausführungsform sind schließlich Zwischenstücke zur Brückung von Leerräumen zwischen benachbarten Modulscheiben vorgesehen, welche insbesondere mechanische Anschlüsse sowie Abmessungen aufweisen, welche ein Anreihen an die an die Zwischenstücke angrenzenden Modulscheiben erlauben, was die Verwindungssteifigkeit der Anordnung weiter erhöht.

Weitere vorteilhafte Ausgestaltungen der Erfindung sind den übrigen Unteransprüchen zu entnehmen. Es zeigt:
- Fig. 1: ein erstes Ausführungsbeispiel eines erfindungsgemäßen elektrischen Gerätes;
- Fig. 2a-c: verschiedene Ansichten eines Zwischen-/Distanzstückes aus Fig.1; und
- Fig. 3: ein zweites Ausführungsbeispiel eines erfindungsgemäßen elektrischen Gerätes.

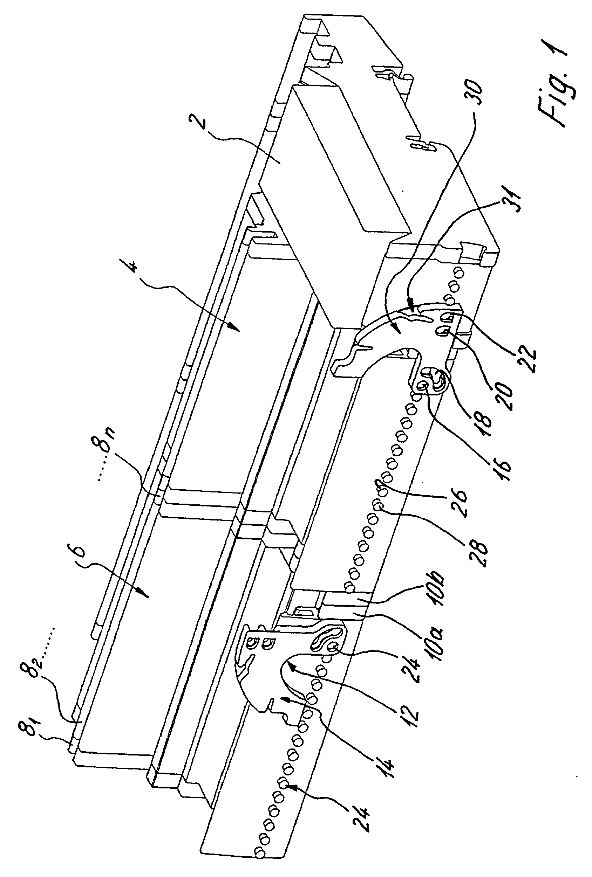

Fig. 1 zeigt ein elektrisches Gerät, welches aus einer Aneinanderreihung von drei Einzelmodulen 2, 4, 6 besteht. Zwischen benachbarten Einzelmodulen 2, 4, 6 erfolgt jeweils die Weiterleitung eines (hier nicht dargestellten) Bussytemes.

Nach Fig. 1 ist das Einzelmodul 2 ist als Bridge (Brücke) ausgebildet. An die Bridge kann beispielsweise ein externes Feldbuskabel angeschlossen werden. Die Einzelmodule 4 und 6 werden (hier nur andeutungsweise zu erkennen) bevorzugt aus einer Anzahl n von Modulscheiben 8₁, 8₂, 8_{3.}..., 8_{n-1,}8ₙ zusammengesetzt. Auf die Modulscheiben kann nach Art des gattungsgemäßen Standes der Technik eine (hier nicht dargestellte) Elektronik aufgesetzt werden.

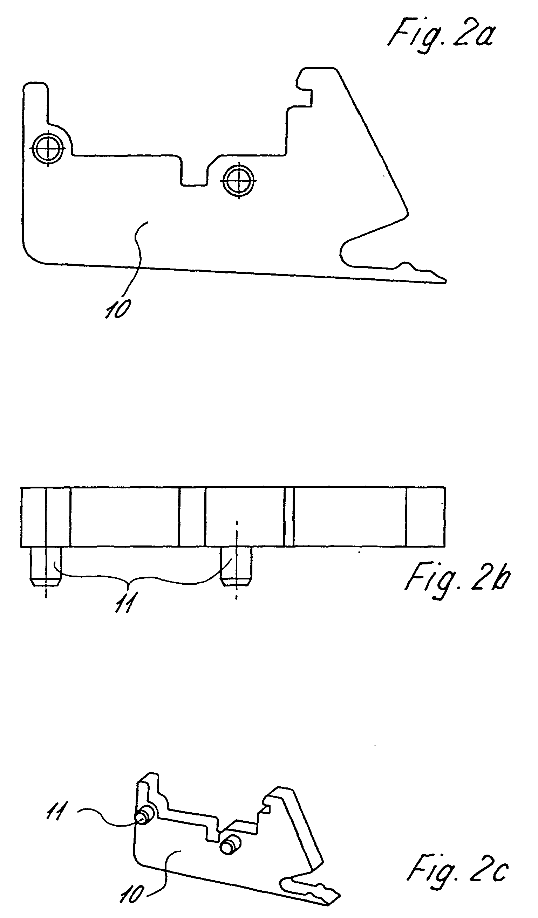

Bei einem verbreiteten Anwendungsfall erstreckt sich die Elektronik bzw. das Elektronikgehäuse von der zweiten Modulscheibe 8₂ bis zur vorletzten Modulscheiben 8ₙ₋₁, so daß von der zweiten bis zur vorletzten Modulscheibe die Verwindungssteifigkeit innerhalb jedes Einzelmodules erhöht wird. Umgekehrt bedeutet dies, daß die jeweils erste und die jeweils letzte Modulscheibe 8₁, 8ₙ weniger gegen Verwindungen geschützt sind. Da zudem die jeweils erste und die jeweils letzte Modulscheibe 8₁, _{,}8ₙ (zum vorderen Bildperspektivenrand hin) eine geringere Tiefe aufweisen, als die übrigen Modulscheiben, ist gemäß der Erfindung vorgesehen, im Bereich der ersten und der letzten Modulscheibe 8₁, _{,}8ₙ die Verwindungssteifigkeit durch zwischen die vorletzte Modulscheibe eines vorhergehenden Modulblockes und die zweite Modulscheibe eines nachfolgenden Modulblockes gesetzte Zwischenstücke 10a und 10b zu erhöhen (siehe auch Fig. 2), welche mechanische Anschlüsse (seitliche Zapfen 11 und hier nicht abgebildete, korrespondierende seitliche Bohrungen) sowie Abmessungen aufweisen, welche ein problemloses Anreihen an die übrigen Modulscheiben erlauben.

Damit die Busleiter nicht durch Rüttelbewegungen versehentlich voneinander gelöst werden, erlauben Verbindungseinrichtungen 12 ein verbessertes mechanisches Aneinanderkoppeln der nebeneinander liegender Einzelmodule 2, 4, 6. Die Verbindungseinrichtungen 12 sind als Riegelstangen bzw. Riegelhebel 14 ausgebildet, welche mit Ausnehmungen 16 - 22 versehen sind, mit denen die Riegelstangen 14 auf an die Einzelmodule 2, 4 angeformte Zapfen 24 aufsetzbar ist.

Bei der in Fig. 1 rechten Riegelstange 14 ist zu erkennen, daß die Ausnehmungen 16 bis 22 und die Zapfen 24 derart ausgebildet sind und zusammenwirken, daß ein Verschwenken der Riegelstangen 14 an den Modulblöcken 2, 4, 6 möglich ist. Im vorliegenden Fall dient der in die erste Ausnehmung 16 eingreifende Zapfen 24 als Drehlager, wobei eine bogenförmige (viertelkreisartige) Form der zweiten Ausnehmung 18 ein Verdrehen der Riegelstange um den Zapfen 24 in der ersten Ausnehmung 16 erlaubt. Die dritten und vierten Ausnehmungen 20, 22 am gegenüberliegenden Ende der Riegelstangen 14 sind seitlich derart geöffnet, daß sie beim Verschwenken der Riegelstange 14 um den Zapfen 24 in der ersten Ausnehmung 16 von den Zapfen 24 abgleiten.

Die Zapfen 24 weisen einen stegartigen Grundabschnitt 26 und einen Stegkopf 28 auf, mit dem sie in eine (nicht zu erkennende) entsprechend ausgeformte Kontur der Ausnehmungen 16 bis 22 eingreifen. Zum Verschwenken der Riegelstangen 14 auf dem Zapfen 24 in der ersten Ausnehmung 16 dient ein im wesentlichen (je nach Einbaubedingung) rechtwinklig zur eigentlichen Riegelstange 14 ausgebildeter, mit dieser einstückig verbundener Griffabschnitt 30 mit Einkerbungen 31 zum Ansetzen eines Schraubendrehers. Da in der Praxis nur die beiden äußeren Scheiben 8, 10 der Module 4 und 6 nicht durch die aufgesetzte (nicht dargestellte) Elektronik gesichert sind, werden im vorliegenden Fall auf jeder Befestigungsseite jeweils zwei der Zapfen 24 genutzt.

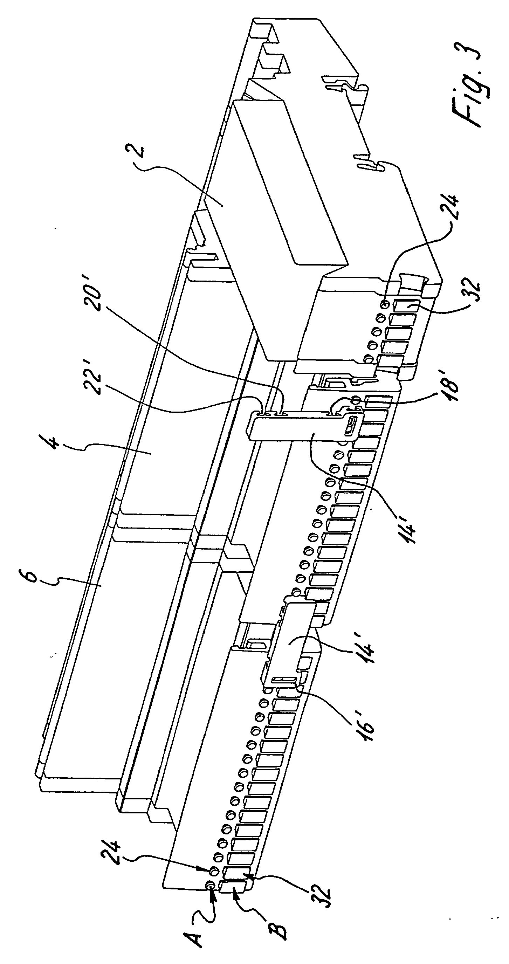

Nach Fig. 1 und 3 wird jede der Modulscheiben 8, 10 mit jeweils einem der Zapfen 24 versehen, da es fertigungstechnisch zu aufwendig wäre, zwischen Modulscheiben mit Zapfen und Modulzapfen ohne Zapfen zu unterscheiden. Die Riegelstangen 14 werden nachträglich bzw. beim Zusammenstellen einer Modulkombination dort aufgerastet, wo man sie benötigt und vom Anwender nach der Montage auf der Tragschiene in ihre Raststellung verschwenkt.

Das Ausführungsbeispiel der Fig. 3 unterscheidet sich von dem Ausführungsbeispiel der Fig. 1 insbesondere dadurch, daß neben der ersten Reihe A von Zapfen 24 durch eine zweite Reihe B von Zapfen 32 mit einer schwalbenschwanzartigen Kontur, welche in entsprechend schwalbenschwanzförmige Ausnehmungen 16' bis 22' einer Riegelstange 14' eingreifen, die Verwindungssteifigkeit des gesamten elektrischen Gerätes erhöht wird. Die Zwischenstücke 10 können damit - wenn gewünscht - eingespart werden.

Die Handhabung dieser Ausführungsform der Erfindung ist wie folgt: Zunächst erfolgt ein Verschwenken der hebelartigen Riegelstange 14' auf dem Zapfen 16 der ersten Zapfenreihe "A" in der ersten langlochartigen Ausnehmung 16' (siehe die linke Riegelstange in Fig. 3). Anschließend wird die Riegelstange dann noch auf die darunterliegende Zapfenreihe "B" abgesenkt, was die Verwindungssteifigkeit deutlich erhöht (siehe die rechte Riegelstange in Fig. 3).

### Bezugszeichen

- Einzelmodule: 2, 4, 6
- Modulscheiben: 8₁, 8₂ , 8_{3.}..., 8_{n-1,}8ₙ
- Zwischenstücke: 10a, 10b
- Zapfen: 11
- Verbindungseinrichtungen: 12
- Riegelhebel: 14
- Ausnehmungen: 16 - 22
- Zapfen: 24
- Grundabschnitt: 26
- Stegkopf: 28
- Griffabschnitt: 30
- Einkerbungen: 31
- Zapfen: 32
- Reihen: A, B

## Patentansprüche

1. Modulartiges elektrisches Gerät, welches eine Mehrzahl nebeneinander auf eine Tragschiene aufsetzbarer Modulblöcke zum Anklemmen externer Leiter aufweist, die mit einer Verbindungseinrichtung miteinander verbindbar sind,
a) wobei die Verbindungseinrichtung (12) als Riegelstange (14, 14') ausgebildet ist, welche Ausnehmungen (16 - 22) und/oder Zapfen aufweist, mit welchen die Riegelstange auf korrespondierende formschlüssige Zapfen (24) und/oder Ausnehmungen an den Außenflächen der Modulblöcke (2, 4, 6) aufsetzbar ist,
b) wobei von Modulblock zu Modulblock elektrische Verbindungen bestehen,
**dadurch gekennzeichnet, dass**
c) wobei wenigstens eine der Ausnehmungen (16) und wenigstens einer der Zapfen derart zusammenwirken, daß die Riegelstange (14, 14') am Modulblock (2, 4, 6) verschwenkbar gelagert sind,
d) wenigstens eine der Ausnehmungen (16) der Riegelstange (14, 14') derart bemessen ist, daß die Riegelstange (14, 14') auf einem der Zapfen (24) verschieblich geführt ist.

2. Modulartiges elektrisches Gerät nach Anspruch 1, **dadurch gekennzeichnet, daß** die Modulblöcke aus Modulscheiben zusammengesetzt sind.

3. Modulartiges elektrisches Gerät nach einem der vorstehenden Ansprüche, **dadurch gekennzeichnet, dass** auf die Modulblöcke wenigstens ein Elektronikgehäuse aufsetzbar ist.

4. Modulartiges elektrisches Gerät nach einem der vorstehenden Ansprüche, **dadurch gekennzeichnet, dass** die von Modulblock zu Modulblock bestehenden elektrischen Verbindungen zur Weitergabe eines Busses zwischen den Modulblöcken dienen.

5. Modulartiges elektrisches Gerät nach einem der vorstehenden Ansprüche, **dadurch gekennzeichnet, dass** die Zapfen (24) an jede der Modulscheiben eines Modulblockes angeformt sind.

6. Modulartiges elektrisches Gerät nach einem der vorstehenden Ansprüche, **dadurch gekennzeichnet, dass** die Zapfen (24) als Steckelemente ausgebildet sind, welche in Aussparungen der Modulblöcke verrastbar sind.

7. Modulartiges elektrisches Gerät nach einem der vorstehenden Ansprüche, **dadurch gekennzeichnet, dass** Riegelstangen (14) mit einem Griffabschnitt (30) zum Verschwenken der Riegelstange auf einem der Zapfen (24) der Modulblöcke versehen sind.

8. Modulartiges elektrisches Gerät nach einem der vorstehenden Ansprüche, **dadurch gekennzeichnet, dass** eine der Aussparungen (18) bogenförmig ausgebildet ist.

9. Modulartiges elektrisches Gerät nach einem der vorstehenden Ansprüche, **dadurch gekennzeichnet, dass** die Modulblöcke (2, 4, 6) an wenigstens einer ihrer Außenflächen mit einer oder mehreren nebeneinanderliegenden Zapfenreihen (A, B) versehen sind.

10. Modulartiges elektrisches Gerät nach einem der vorstehenden Ansprüche, **dadurch gekennzeichnet, dass** eine der Zapfenreihen (A) aus Zapfen (24) gebildet wird, welche einen zylindrischen Steg (26) und einen darauf aufgesetzten Zapfenkopf (28) aufweisen.

11. Modulartiges elektrisches Gerät nach einem der vorstehenden Ansprüche, **dadurch gekennzeichnet, dass** eine der Zapfenreihen (B) aus schwalbenschwanzförmigen oder entsprechenden Formschlußelementen (32) besteht.

12. Modulartiges elektrisches Gerät nach einem der vorstehenden Ansprüche, **dadurch gekennzeichnet, dass** die Ausnehmungen (16 - 22) im Riegelstangenelement eine schwalbenschwanzförmige oder entsprechende Geometrie aufweisen, so daß die Riegelstangenelemente über die eine der Zapfenreihen aus schwalbenschwanzförmigen oder entsprechenden Formschlußelementen schiebbar ist.

13. Modulartiges elektrisches Gerät nach einem der vorstehenden Ansprüche, **dadurch gekennzeichnet, dass** eines der Einzelmodule als Bridge (2) zum Anschluß eines externen Busses ausgelegt ist.

14. Modulartiges elektrisches Gerät nach einem der vorstehenden Ansprüche oder nach dem Oberbegriff des Anspruches 1, **dadurch gekennzeichnet, dass** Zwischenstücke (10) zur Brückung von Leerräumen zwischen benachbarten Modulscheiben (8) vorgesehen sind.

15. Modulartiges elektrisches Gerät nach einem der vorstehenden Ansprüche, **dadurch gekennzeichnet, dass** die Zwischenstücke (10a, 10b) mechanische Anschlüsse sowie Abmessungen aufweisen, welche ein Anreihen an die an die Zwischenstücke (10) angrenzenden Modulscheiben erlauben.

## Claims

1. A modular electrical device having a plurality of module blocks which can be placed adjacent to one another on a mounting rail for clamping external conductors and can be connected to one another by means of a connecting device,
a) the connecting device (12) being designed as a locking bar (14, 14') which has recesses (16-22) and/or pins by means of which said locking bar can be placed on corresponding positive locking pins (24) and/or recesses on the outer surfaces of the module blocks (2, 4, 6),
b) electrical connections existing from module block to module block,
**characterised in that**
c) at least one of the recesses (16) and at least one of the pins co-operate in such a manner that the locking bar (14, 14') is mounted on the module block (2, 4, 6) in such a manner that it is able to pivot,
d) at least one of the recesses (16) in the locking bar (14, 14') is dimensioned such that the locking bar (14, 14') is mounted on one of the pins (24) in such a manner that it is able to slide.

2. A modular electrical device in accordance with claim 1,
**characterised in that**
the module blocks are made up of module plates.

3. A modular electrical device in accordance with one of the preceding claims,
**characterised in that**
at least one an electronics housing can be placed on the module blocks.

4. A modular electrical device in accordance with one of the preceding claims,
**characterised in that**
the electrical connections which exist from module block to module block serve to relay a bus between the module blocks.

5. A modular electrical device in accordance with one of the preceding claims,
**characterised in that**
the pins (24) are moulded onto each of the module plates of a module block.

6. A modular electrical device in accordance with one of the preceding claims,
**characterised in that**
the pins (24) are designed as plug-in elements which can be locked into recesses in the module blocks.

7. A modular electrical device in accordance with one of the preceding claims,
**characterised in that**
locking bars (14) with a handle section (30) for pivoting the locking block onto one of the pins (24) on the module block are provided.

8. A modular electrical device in accordance with one of the preceding claims,
**characterised in that**
one of the recesses (18) is curved in shape.

9. A modular electrical device in accordance with one of the preceding claims,
**characterised in that**
at least one of the outer surfaces of the module blocks (2, 4, 6) is provided with one or more adjacent rows of pins (A, B).

10. A modular electrical device in accordance with one of the preceding claims,
**characterised in that**
one of the rows of pins (A) consists of pins (24) which have a cylindrical shank (26) placed on top of which is a pin head (28).

11. A modular electrical device in accordance with one of the preceding claims,
**characterised in that**
one of the rows of pins (B) consists of positive locking elements (32) which have a dove-tailed or corresponding shape.

12. A modular electrical device in accordance with one of the preceding claims,
**characterised in that**
the recesses (16-22) in the locking bar element have a dove-tailed or corresponding geometry such that the locking bar elements can be pushed over the row of pins with dove-tailed or corresponding positive locking elements.

13. A modular electrical device in accordance with one of the preceding claims,
**characterised in that**
one of the individual modules is designed as a bridge (2) for the connection of an external bus.

14. A modular electrical device in accordance with one of the preceding claims or the pre-characterising clause of claim 1,
**characterised in that**
transition pieces (10) are provided to bridge gaps between adjacent module plates (8).

15. A modular electrical device in accordance with one of the preceding claims,
**characterised in that**
the transition pieces (10a, 10b) have mechanical connections and dimensions which permit them to be attached to the module plates adjacent to said transition pieces (10).

## Revendications

1. Appareil électrique de type modulaire qui comporte une pluralité de blocs modulaires pouvant être montés côte à côte sur un profilé support, pour le raccordement de conducteurs externes, qui peuvent être connectés ensemble à l'aide d'un dispositif de connexion,
a) le dispositif de connexion (12) étant conformé en tige de verrouillage (14, 14') qui présente des évidements (16-22) et/ou des tenons grâce auxquels la tige de verrouillage peut être montée par complémentarité de forme, sur des tenons (24) et/ou des évidements correspondants sur les surfaces extérieures des blocs modulaires (2, 4, 6),
b) des liaisons électriques existant d'un bloc modulaire à l'autre,
**caractérisé en ce que**
c) au moins l'un des évidements (16) et au moins l'un des tenons coopèrent de sorte que les tiges de verrouillage (14, 14') soient montées pivotantes sur le bloc modulaire (2, 4, 6),
d) au moins l'un des évidements (16) de la tige de verrouillage (14, 14') est dimensionné de manière à ce que la tige de verrouillage (14, 14') puisse être déplacée sur l'un des tenons (24).

2. Appareil électrique de type modulaire selon la revendication 1, **caractérisé en ce que** les blocs modulaires sont composés de plaques modulaires.

3. Appareil électrique de type modulaire selon l'une quelconque des revendications précédentes, **caractérisé en ce qu'**au moins un boîtier électronique peut être monté sur les blocs modulaires.

4. Appareil électrique de type modulaire selon l'une quelconque des revendications précédentes, **caractérisé en ce que** les liaisons électriques existant d'un bloc modulaire à l'autre servent à la transmission d'un bus entre les blocs modulaires.

5. Appareil électrique de type modulaire selon l'une quelconque des revendications précédentes, **caractérisé en ce que** les tenons (24) sont rapportés sur chacune des plaques modulaires d'un bloc modulaire.

6. Appareil électrique de type modulaire selon l'une quelconque des revendications précédentes, **caractérisé en ce que** les tenons (24) sont conformés en éléments enfichables qui sont encliquetables dans les évidements des blocs modulaires.

7. Appareil électrique de type modulaire selon l'une quelconque des revendications précédentes, **caractérisé en ce que** les barres de verrouillage (14) sont munies d'une partie de préhension (30) pour le pivotement de la barre de verrouillage sur l'un des tenons (24) des blocs modulaires.

8. Appareil électrique de type modulaire selon l'une quelconque des revendications précédentes, **caractérisé en ce que** l'un des évidements (18) est conformé en arc.

9. Appareil électrique de type modulaire selon l'une quelconque des revendications précédentes, **caractérisé en ce que** les blocs modulaires (2, 4, 6) sont équipés sur l'une de leurs faces extérieures au moins, d'une ou plusieurs rangées de tenons (A, B) juxtaposées.

10. Appareil électrique de type modulaire selon l'une quelconque des revendications précédentes, **caractérisé en ce que** l'une des rangées de tenons (A) est constituée des tenons (24) qui comportent une barrette (26) cylindrique et une tête de tenon (28) montée sur ladite barrette.

11. Appareil électrique de type modulaire selon l'une quelconque des revendications précédentes, **caractérisé en ce qu'**une rangée de tenons (B) est constituée d'éléments d'engagement par complémentarité de forme (32) en queue d'aronde ou correspondants.

12. Appareil électrique de type modulaire selon l'une quelconque des revendications précédentes, **caractérisé en ce que** les évidements (16-22) dans l'élément de tige de verrouillage présentent une géométrie en queue d'aronde ou correspondante, de sorte que les éléments de la tige de verrouillage peuvent être poussés au-dessus de l'une des rangées de tenons, hors des éléments d'engagement par complémentarité de forme en queue d'aronde ou correspondants.

13. Appareil électrique de type modulaire selon l'une quelconque des revendications précédentes, **caractérisé en ce que** l'un des modules individuels est conçu sous forme de pont (2) pour le raccordement d'un bus externe.

14. Appareil électrique de type modulaire selon l'une quelconque des revendications précédentes ou selon le préambule de la revendication 1, **caractérisé en ce que** des pièces intermédiaires (10) sont prévues pour ponter les espaces vides entres les plaques modulaires (8) attenantes.

15. Appareil électrique de type modulaire selon l'une quelconque des revendications précédentes, **caractérisé en ce que** les pièces intermédiaires (10a, 10b) comportent des raccordements mécaniques ainsi que des dimensions qui permettent une jonction avec les plaques modulaires attenantes aux pièces intermédiaires (10).
